# DEMANDE DE BREVET EUROPEEN

(11) **EP 0 603 046 A1**
(43) Date de publication de la demande: **22.06.1994**
(21) Numéro de dépôt: 93403001.6
(22) Date de dépôt: 13.12.1993
(51) Int. Cl.: C08G 18/12, C08G 18/48, C08G 18/66, C08G 18/67, C08G 18/73, C08G 18/75, C08F 299/06, C09J 175/16

(54) **Polymères polyuréthanes-acryliques prégélifiables par la température et post-durcissables par l'humidité, et compositions adhésives monocomposantes les contenant**

(30) Priorité: 16.12.1992 FR 9215182
(71) Demandeur: CECA S.A., F-92800 Puteaux (FR)
(72) Inventeur: Charriere, Bruno, F-64110 Jurançon (FR)
(74) Mandataire: Haicour, Philippe

(57) **Abrégé**

On décrit des prépolymères constitués d'une chaîne polyuréthane aliphatique ou alicyclique dont les extrémités de chaînes sont constituées pour partie de groupes isocyanates libres, et pour partie de groupements insaturés polymérisables radicalairement. Ces prépolyméres sont prégélifiables thermiquement et post-polymérisables à l'humidité. On en fait des mastics adhésifs eux-mêmes prégélifiables et post-polymérisables, appréciés notamment pour le collage de verre sur substrat métallique ou composite en carrosserie d'automobiles.

## Description

L'invention décrite ci-après a trait au domaine des adhésifs polyuréthanes monocomposants, et plus particulièrement à de telles compositions adhésives durcissant lentement sous l'action de l'humidité atmosphérique mais susceptibles d'une prégélification rapide sous l'action de la température.

L'assemblage d'éléments structuraux par collage est une technique utilisée déjà depuis fort longtemps dans l'industrie, notamment dans l'électronique et l'industrie aéronautique. Néanmoins, malgré les avantages qu'ils apportent par rapport aux procédés d'assemblage plus traditionnels (soudure, rivetage...), les procédés de collage structural n'ont reçu un début de développement important que très récemment dans les industries où les cadences de production sont très élevées, en particulier l'industrie automobile. L'une des raisons en est que la plupart des adhésifs structuraux traditionnels nécessitent des durées de cuisson longues, à des températures souvent élevées, pour que l'assemblage collé puisse être manipulé sans déformation, ce qui rend difficile leur application dans des chaînes de montage à cadence élevée.

Ce problème peut être partiellement résolu par l'utilisation d'adhésifs à deux composants à prise rapide. Mais dans ce cas, la mise en oeuvre est rendue plus difficile et plus coûteuse, à cause de la nécessité de mélanger intimement des volumes très précis de résine et de durcisseur. Ce phénomène est particulièrement aigu dans le cas des adhésifs polyuréthanes bicomposants, ou la précision du rapport d'emploi résine/durcisseur est très importante et peut conduire à des baisses catastrophiques des propriétés mécaniques de l'assemblage lorsque ce rapport n'est pas respecté de manière très précise. En outre, la mise en oeuvre de bicomposants nécessite l'utilisation de machines complexes, dont les buses doivent être purgées fréquemment afin d'éviter la prise en masse de l'adhésif.

Les adhésifs monocomposants ne souffrent pas de ces inconvénients, et c'est pourquoi on a plus récemment fait appel à de nouveaux adhésifs de cette catégorie pouvant être mis en oeuvre grâce à des techniques de chauffage rapide telles que l'induction électromagnétique haute fréquence, le chauffage par hystérèse diélectrique haute fréquence, par application de micro-ondes, ou encore par rayonnement ultraviolet dans le cas où l'un des substrats au moins est transparent. Chimiquement ces adhésifs se distinguent en deux classes : d'une part des adhésifs comportant un durcisseur latent, ne devenant actif qu'à partir d'une certaine température, d'autre part les systèmes insaturés (vinyliques ou diéniques) capable de réticuler thermiquement par des processus radicalaires.

La latence des adhésifs du premier type, qu'ils soient basés sur des composants époxy ou polyuréthane, n'est jamais parfaite, et il se pose à leur sujet des problèmes de durée de conservation au stockage et au transport au cours desquels les températures atteignent couramment 35 à 40°C. De plus, le déblocage et la réactivité de ces durcisseurs latents ne sont pas instantanés et leur vitesse de durcissement est généralement insuffisante pour répondre aux exigences imposées par les cadences d'assemblages industriels. En revanche, des adhésifs monocomposants constitués de prépolymères uréthanes à terminaisons insaturées (vinyliques) capables de réticuler thermiquement selon un processus radicalaire sont largement utilisés dans des domaines tels que la formulation des encres d'imprimerie, des vernis photopolymérisables et de certains adhésifs tels que les adhésifs acryliques modifiés (quelquefois nommés "adhésifs acryliques de seconde génération", ou "adhésifs aérobies"). De tels prépolymères constituent également la base d'adhésifs dits "anaérobies", utilisés en mécanique pour le freinage des éléments filetés. Ces prépolymères, généralement qualifiés d'uréthane-acrylates, résultent essentiellement de la réaction d'un polyisocyanate avec un excès de monoalcool insaturé, et toutes les extrémités réactives de ces macromolécules sont constituées de groupements insaturés, à l'exclusion de groupements isocyanates résiduels et sont polymérisables par processus radicalaire, par exemple par amorçage par un peroxyde, par couple oxydant/réducteur, par complexe de transfert de charges, ou encore par photopolymérisation. Ces produits constituent, après polymérisation, des polymères réticulés (on dit aussi thermodurs) semblables à des polymères acryliques ou vinyliques ordinaires, mais doués d'intéressantes propriétés mécaniques, telle que la ténacité et la résistance aux chocs, qui font notoirement défaut à ces derniers. Néanmoins, ils ne possèdent pas les caractéristiques typiques d'élastomères qu'on aurait été en droit d'attendre de structures partiellement polyuréthanes.

On connaît par ailleurs des adhésifs structuraux à base de prépolymères polyester-uréthanes ou polyéther-uréthanes à terminaisons isocyanates libres, qui sont susceptibles de durcir spontanément par réaction avec l'humidité ambiante et qui présentent, après durcissement, un faible module élastique qu'ils conservent aux basses températures; leur grande souplesse les fait apprécier pour l'assemblage de matériaux possédant des coefficients d'expansion thermique très différents (par exemple verre et métal, ou verre et polymères thermoplastiques), ou encore pour l'assemblage de tôles minces lorsque celles-ci ne peuvent souffrir aucune déformation (par exemple collage de renforts sur carrosserie). Les mastics polyuréthanes monocomposants durcissables sous l'effet de l'humidité atmosphérique ambiante sont très largement répandus dans l'industrie automobile pour la fixation des vitrages sur la carrosserie. Ils présentent cependant l'inconvénient majeur de ne réagir que très lentement; et de ne permettre la réalisation que de collages qui ne deviennent réellement manipulables que quelques dizaines de minutes à quelques heures après l'assemblage. Il faut alors maintenir temporairement l'assemblage à l'aide d'un dispositif de maintien mécanique (sangles, rubans adhésifs, goupilles..), ce qui complique singulièrement la mise en oeuvre de l'adhésif. On y a partiellement remédié en formulant ces adhésifs sous forme de colles thermofusibles qu'on applique à chaud, au-delà de leur point de fusion, qui forment un joint qui dès refroidissement offre une cohésion suffisante pour permettre une certaine manipulation de l'assemblage, et dont les propriétés mécaniques finales se développent ensuite lentement (en quelques dizaines d'heures), par action de l'humidité atmosphérique sur les groupements isocyanates résiduels de la résine. Ces adhésifs sont connus de l'homme de l'art sous leur acronyme HMPU (Hot-melt polyuréthanes) et largement utilisés ; mais ils nécessitent des équipements de mise en oeuvre particuliers, car ils doivent être sévèrement protégés de l'humidité ambiante lorsqu'ils sont maintenus à l'état fondu dans les machines d'application.

On a tenté par la suite de combiner les propriétés des systèmes vinyliques thermiquement polymérisables et des polyuréthanes réactifs par excès de groupes isocyanates dans des structures divulguées dans la publication européenne EP 40152. Comme les précédents, ces adhésifs reposent sur des prépolymères polyuréthanes à terminaisons isocyanates, mais comportant en plus des doubles liaisons acryliques pendantes le long de la chaîne uréthane. Ces groupements réactifs sont introduits par le biais d'un diol acrylique entrant dans la composition du polyuréthane. Du fait qu'ils ne possèdent pas de doubles liaisons terminales, ces adhésifs sont réputés présenter une grande fluidité qui leur permet d'être mis en oeuvre pour le complexage de films à l'aide des machines traditionnelles sans qu'il soit nécessaire de recourir à des solvants, ou à des taux d'isocyanates trop élevés pour un usage alimentaire. Après enduction sur l'un des substrats, le film de colle est soumis à une photoréticulation, ce qui augmente considérablement son collant, avant l'application du second support; la réticulation finale s'opère par la suite sous l'action de l'humidité sur les isocyanates terminaux. Des techniques voisines sont décrites dans le brevet DE 4041753. Bien qu'elles comprennent une première étape au cours de laquelle se développent sensiblement la viscosité et le collant de la couche d'adhésif, empêchant ainsi le glissement relatif des films contrecollés l'un par rapport à l'autre, elles ne permettent pas d'assurer rapidement, c'est -à-dire en quelques secondes, une liaison suffisamment puissante entre deux pièces lourdes.

Ces divers adhésifs présentent chacun de réels avantages, mais aucun ne résout de façon vraiment satisfaisante le problème du collage structural semi-rigide dans une mise en oeuvre industrielle à cadence rapide d'assemblage.

La demanderesse a maintenant réalisé qu'un prépolymère uréthane comportant à la fois des terminaisons isocyanates libres et des terminaisons vinyliques, mais sous respect de proportions bien définies entre ces deux types de terminaisons, pouvait constituer un adhésif à la fois susceptible d'acquérir une cohésion suffisante sous l'effet de la température et de se post-polymériser sous l'effet de l'humidité, le résultat final étant un polymère dont la transition vitreuse se situe dans la zone de température souhaitée située entre -80°C et -40°C, de préférence inférieure à -60°C, avec les caractéristiques de souplesse qui en découlent. Dans la suite de l'exposé, on dénomme "prégélification" le développement de cohésion du prépolymère par effet thermique, et l'on qualifiera de "prégélifiables" les produits susceptibles de subir une telle modification ; on utilisera le terme de post-polymérisation pour décrire la phase finale au cours de laquelle le prépolymère poursuit sa polymérisation et sa réticulation sous l'action de l'humidité ambiante et acquiert ses propriétés définitives.

L'invention est donc constituée par un prépolymère constitué d'un oligomère polyuréthane aliphatique ou alicyclique comportant des segments souples à basse température de transition vitreuse, dont une partie des terminaisons de chaînes est constituée de groupes isocyanates libres, lesquels représentent entre environ 2 et environ 6 % du poids total du prépolymère, les autres extrémités de chaînes étant constituées de groupements insaturés polymérisables radicalairement, le rapport entre le nombre de terminaisons insaturées et le nombre de terminaisons isocyanates étant compris entre environ 0,5 et environ 2.

On réalise un tel prépolymère selon le procédé général suivant, qui fait également partie de l'invention, et qui consiste à faire réagir un diisocyanate aliphatique ou alicyclique sur un mélange de deux composés hydroxylés :
a) un diol oligomère à terminaisons hydroxyles ayant une masse molaire moyenne impérativement comprise entre 1000 et 4000, et de préférence comprise entre environ 2000 et environ 4000, et dont la température de transition vitreuse inférieure à -40°C, de préférence inférieure à -60°C ;
b) un composé monohydroxylé insaturé susceptible de se polymériser en présence d'un amorceur radicalaire, par exemple un acrylate ou méthacrylate d'hydroxyalcoyle;
   et optionnellement,
c) un diol ou une diamine de masse molaire, comprise entre 60 et 200, désigné ci-après comme "allongeur de chaîne".

La nature chimique des constituants utilisés dans la synthèse du prépolymère prégélifiable n'est pas critique, pour autant que leurs rapports molaires sont calculés de telle sorte que, comme énoncé précédemment, un excès de groupes isocyanates soit présent et que, lorsque la réaction de condensation hydroxyles/isocyanates est terminée, tous les groupes hydroxyles ayant réagi, la teneur des fonctions isocyanates résiduelles dans le prépolymère soit comprise approximativement entre 2 et 6 % en poids par rapport au prépolymère, et que le rapport entre le nombre de doubles liaisons polymérisables et le nombre de groupes isocyanates résiduels dans le prépolymère soit approximativement compris entre 0,5 et 2. On peut néanmoins préciser les points suivants.

Les diisocyanates utiles pour l'invention sont des diisocyanates aliphatiques ou alicycliques de masse moléculaire inférieure à 350. Dans les conditions de la présente invention, l'emploi de diisocyanates aromatiques, tels que le TDI ou les divers grades de MDI disponibles, et quelles que soient les précautions opératoires, se heurte à une augmentation de la viscosité des milieu réactionnels telle qu'il n'est pas possible de terminer la synthèse du prépolymère. Sont utilisables des diisocyanates tels que l'isocyanate de 5-isocyanato-1-(isocyanatométhyl)-1,3,3-triméthylcyclohexane (diisocyanate d'isophorone), les diisocyanates de 1,4- et 1,6-hexaméthylène, le diisocyanate de 1,4-tétraméthylène, le diisocyanate de 1,4-cyclohexyle, le 4,4'-méthylènebis(cyclohexylisocyanate), le 4,4'-isopropylidènebis(cyclohexylisocyanate). On préfère le 5-isocyanato-1-(isocyanatométhyl)-1,3,3-triméthylcyclohexane.

Le diol de masse moléculaire moyenne est pris dans le groupe des polyétherdiols ou des polyesterdiols, de masse molaire moyenne comprise entre 1000 et 4000, de préférence entre 2000 et 4000, et de température de transition vitreuse n'excédant pas -40°C, et de préférence inférieure à -60°C. On préfère les polyétherdiols de masse molaire moyenne supérieure ou égale à 2000. On préfère particulièrement les polytétraméthylène glycols de masses molaires comprises entre 2000 et 3000.

Le composé monohydroxylé insaturé peut être représenté par la formule générale :

CH₂=CH(R₁)-C(O)O-[CH₂-R₂O]ₙ-H,

où:
R₁ est H ou CH₃,
R₂ est CH₂ ou CH(CH₃),
n est compris entre 1 et 4,
par exemple, l'acrylate de 2-hydroxyéthyle, l'acrylate de 2-hydroxyproyle, le méthacrylate de 2-hydroxyéthyle, le méthacrylate de 2-hydroxypropyle. On préfère l'acrylate de 2-hydroxyéthyle.

L'allongeur de chaîne peut-être pris dans la classe des diols et diamines aliphatiques de masse molaire comprise entre 60 et 200. Par exemple, le 1,4-butanediol, le 1,3-butanediol, le 2-éthyl-1,3-hexanediol, le 1,4-cyclohexane-diol, le 1,4-bis(hydroxyméthyl)cyclohexane, le 1,4-diaminocyclohexane, le 4,4'-bis(aminocyclohexyl)méthane. Un composé préféré est le 1,4-bis(hydroxyméthyl)cyclohexane.

Les amorceurs radicalaires sont des composé capables de se décomposer thermiquement en générant des radicaux libre susceptibles d'amorcer une polymérisation. Ce sont des agents bien connus de l'homme du métier de la polymérisation. On préfère ici des composés dont la température de décomposition se situe entre 80°C et 200°C. On cite, sans que cette liste soit limitative, le peroxyde de benzoyle, le peroxyde de lauroyle, le peroxyde de tertiobutyle, le peroxyde de dicumyle, l'hydroperoxyde de cumyle, le perbenzoate de tertiobutyle, l'azobis(isobutyro)nitrile, I'azobis(isovaléro)nitrile.

Sur la base de ces prépolymères uréthanes prégélifiables, on constitue des adhésifs eux-mêmes prégélifiables, qui sont également partie de l'invention. Ces compositions adhésives sont des formulations obtenues par simple mélange de 50 à 90 % en poids d'un prépolymère prégélifiable tel que défini ci-dessus, et contenant en outre 0,3 à 3 % en poids d'un composé ou d'un mélange de composés générateurs de radicaux libres dont la fonction est d'amorcer une polymérisation radicalaire lorsqu'ils sont portés au-delà d'une certaine température, supérieure à la température ambiante. L'opération doit être conduite rigoureusement à l'abri de toute trace d'humidité (on se place généralement sous azote sec), en maintenant la température en dessous du seuil à partir duquel l'amorceur peut commencer à se décomposer, de toute façon à une température inférieure à 40°C, et de préférence le plus près possible de 25°C. Le mélange est effectué dans un mélangeur suffisamment robuste pour homogénéiser efficacement des mélanges fortement visqueux, pouvant travailler à l'abri de toute trace d'humidité, et dans lequel on peut procéder à un dégazage par mise sous vide. Il faut en effet purger le mastic final de tout air ou azote pour qu'il ne se forme pas de bulles dans l'adhésif lors du chauffage pendant l'étape de prégélification.

Ces compositions adhésives renferment encore de 0,01 à 0,1 % d'un inhibiteur de polymérisation radicalaire pour assurer leur stabilité au stockage jusqu'à des températures d'environ 40°C, un inhibiteur radicalaire, c'est à dire un composé capable de s'opposer au démarrage intempestif d'une réaction de polymérisation radicalaire, en captant et neutralisant les radicaux libres présents en faible quantité tant que la température n'excède pas une certaine limite qui dépend de l'amorceur présent. On utilise de préférence les inhibiteurs couramment utilisés pour la stabilisation des monomères vinyliques et acryliques commerciaux, par exemple l'hydroquinone, le paraméthoxyphénol, le paratertiobutylphénol, la 1,4-benzoquinone, la 1,4-naphtoquinone, la phénothiazine. Outre ces trois constituants essentiels, la formulation renferme généralement divers adjuvants de formulation entrant habituellement dans la composition d'adhésifs structuraux, et bien connus de l'homme de l'art. Il s'agit par exemple de charges minérales ou organiques, de promoteurs d'adhésion, de diluants ou autres régulateurs de viscosité, de plastifiants, d'agents thixotropants, de catalyseurs de la réaction isocyanate/humidité, de desséchants, etc... L'indication de ces adjuvants est donnée pour mémoire, ces produits ne faisant pas spécifiquement partie de l'invention.

La prégélification, que l'on a définie précédemment comme une caractéristique d'utilisation des prépolymères et des adhésifs selon l'invention, est à la fois comprise comme l'étape au cours de laquelle s'accomplit un durcissement partie desdits prépolymères ou adhésifs et comme le résultat des transformation accomplies au cours de cette étape. On considère que le prépolymère est prégélifié lorsque le nombre de fonctions réactives ayant réagi est tel que le polymère ainsi obtenu forme déjà un réseau tridimensionnel, donc infusible et insoluble. Au niveau de l'adhésif, cela signifie que le taux de conversion des fonctions réactives est tel qu'il a développé une cohésion suffisante pour assurer la manipulation du joint. La résistance au cisaillement nécessaire pour que l'assemblage soit manipulable dépend évidemment de la géométrie et du poids de l'assemblage. Toutefois, dans la majorité des cas, cette manipulation est assurée lorsque la résistance au cisaillement est supérieure à environ 0,3 MPa. On dispose ainsi d'un moyen pratique, parmi d'autres, pour tester la prégélification de l'adhésif, qui consiste à mesurer la résistance au cisaillement de l'assemblage après qu'il ait été soumis au cycle de prégélification, et à s'assurer qu'elle atteint ou excède la valeur de 0,3 MPa. La réactivité thermique des adhésifs prégélifiables est telle que leur prégélification peut être obtenue dans des temps très brefs, de l'ordre de quelques dizaines de secondes lorsque la chaleur est apportée par irradiation, par exemple hystérèse diélectrique haute fréquence, micro-ondes, induction électromagnétique haute fréquence, rayonnement infrarouge.

La post-polymérisation par l'humidité des prépolymères et adhésifs prégélifiés selon l'invention s'opère ensuite à température ambiante de manière conventionnelle, comme pour les mastics polyuréthanes non-prégél ifiables, actuellement utilisés dans le collage des vitrages. Cette réaction consomme les fonction isocyanates libres restant en bout de chaîne, ce qui aboutit finalement à une réticulation complète du mastic par la formation de liaisons urée. Cette réaction s'étend sur plusieurs jours, voire plusieurs semaines si l'assemblage est stocké à une température inférieure à 20°C.

Cette post-polymérisation par l'humidité se poursuit tant qu'il reste des fonctions isocyanates libres dans l'adhésif et affecte finalement la masse du joint dans sa totalité. Le durcissement final du joint adhésif est de ce fait complet, même s'il existe des zones qui ont échappé à une prégélification correcte. Cette propriété est particulièrement appréciée dans le cas où la chaleur est apportée par un procédé d'irradiation, tel que le chauffage par hystérèse diélectrique haute fréquence, ou par induction electromagnétique haute fréquence, et où l'on ne maîtrise qu'imparfaitement la température en chaque point du joint de colle.

L'invention trouve son application, notamment dans l'assemblage d'éléments par collage et à l'étanchéification et au scellement d'éléments assemblés. L'une des applications préférées en est le collage de verre sur un substrat métallique ou en matériau composite. C'est le cas par exemple du collage d'un vitrage sur une carrosserie d'automobile. D'autres applications potentielles concernent les collages de verre sur des substrats métalliques, notamment dans l'industrie du mobilier métallique, ou dans celle de l'électroménager.

Les exemples suivants illustreront et feront mieux comprendre l'invention.

### EXEMPLE I

Le prépolymère prégélifiable P1 décrit dans l'exemple ci-dessous est constitué d'un oligo-uréthane basé sur un polytétraméthylène diol de masse molaire 2900, et dont la température de transition vitreuse est de -86°C. L'isocyanate est le diisocyanate d'isophorone. Le composé monohydroxylé insaturé est l'acrylate d'hydroxyéthyle. Les rapports molaires de ces divers constituants sont tels que la teneur en groupements isocyanates dans le prépolymère est de 3,2 %, et que sa teneur en doubles liaisons est de 0,86 mmol/g, soit un rapport entre le nombre de terminaisons isocyanates et le nombre de terminaisons insaturées de 0,9. Le composé permettant l'amorçage de la réaction radicalaire est le peroxyde de benzoyle. L'inhibiteur de polymérisation radicalaire est la parabenzoquinone. La composition pondérale des réactifs pour la synthèse du prépolymère selon l'invention est la suivante :
- Polytétraméthylèneglycol (masse molaire 2900) 66,61 parties
- Diisocyanate d'isophorone 23,17
- Acrylate d'hydroxyéthyle 9,98
- p-Benzoquinone 0,11
- Dibutyldilaurate d'étain 0,02
- Triéthylènediamine 0,11

Les réactifs sont mélangés et la réaction est conduite à 80°C sous azote sec, pendant environ 2 heures. La teneur en isocyanates est dosée à intervalles réguliers, en prélevant une aliquote de 0,5 g que l'on fait réagir sur un excès de dicyclohexylamine dans le diméthylformamide, suivi d'un dosage en retour de la dicyclohexylamine non réagie par l'acide chlorhydrique 0,1N. On considère que la réaction est terminée lorsque deux mesures consécutives à 20 minutes d'intervalle donnent un résultat identique à 0,1% près.

Le produit final est un liquide homogène visqueux, de couleur orange, ayant la consistance d'un miel. Sa teneur massique réelle en isocyanates de 3,1 %.

### EXEMPLE II

On synthétise deux prépolymères, le prépolymère P2, selon l'invention, et le prépolymère P0, possédant une structure uréthane-acrylate classique, sans groupements isocyanates résiduels. Les compositions des prépolymères P2 et P0 ne diffèrent que par le fait que dans le prépolymère P0, les isocyanates terminaux sont neutralisés et remplacés par des groupements acryliques en augmentant la teneur en acrylate d'hydroxyéthyle dans la composition dans une proportion telle que le nombre total de groupements hydroxyles soit en léger excès par rapport au nombre de moles de groupements isocyanates introduits dans les réactifs.

Ces prépolymères sont obtenus à partir de polytétraméthylène diol de masse molaire 2900. Les rapports molaires des divers constituants sont tels que la teneur en groupements isocyanates dans le prépolymère P2 est de 5,3 %, et que sa teneur en doubles liaisons est de 0,85 mmol/g, soit un rapport entre le nombre de terminaisons isocyanates et le nombre de terminaisons insaturées de 1,49. La teneur en doubles liaisons dans le prépolymère P0 correspond à celle de P2 dans lequel on aurait substitué chaque extrémité isocyanate par un acrylate, ce qui conduit à une concentration en insaturations de 1,9 mmol/g.
La composition pondérale des réactifs pour la synthèse des prépolymères P2 et P0 sont les suivantes :

| **Réactifs** | **Prépolymères** | |
|---|---|---|
| | **P2** | **P0** |
| Polytétraméthylèneglycol (M_{w} = 2900) | 54,48 | 54,48 |
| 4,4'-bis(Hydroxyméthyl)-cyclohexane | 2,71 | 2,71 |
| Diisocyanate d'isophorone | 31,54 | 31,54 |
| Acrylate d'hydroxyéthyle | 9,74 | 25,45 |
| p-Benzoquinone | 0,105 | 0,105 |
| Dibutyldilaurate d'étain | 0,021 | 0,021 |
| Triéthylènediamine | 0,105 | 0,105 |

Les réactifs sont mélangés et la réaction est conduite à 80°C sous azote sec, en dosant périodiquement la teneur en isocyanates selon la méthode de l'exemple I. Après 2,5 heures de réaction, on trouve une teneur en isocyanates constante de 5,1 % pour le prépolymère P2 et 0 % pour le prépolymère P0. Les produits finaux sont des liquides homogènes visqueux, de couleur orange.

### Exemple III Exemple de préparation d'adhésifs

Tous les adhésifs exemplifiés ici ont été formulés de la même manière, seul variant la nature du prépolymère utilisé. On mélange dans un malaxeur, sous couverture d'azote sec, et en maintenant la température à 25°C, les composés suivants :

| | |
|---|---|
| Prépolymère | 100 |
| Peroxyde de benzolyle | 2,10 |
| Carbonate de calcium stéaraté | 16,20 |
| Oxyde de calcium | 3,00 |
| Sulfate de baryum | 7,50 |
| Tamis moléculaire (déshydratant) | 7,50 |
| Silice pyrogénée hydrophobe | 3,00 |
| Diméthacrylate de triéthylèneglycol | 5,25 |
| Isocyanate de tosyle | 0,30 |
| bis(γ-Triméthoxysilylpropyl)amine | 1,50 |
| Plastifiant (quaterphényls hydrogénés) | 6,00 |

La formulation est dégazée sous un vide d'environ 500 Pa. Ces adhésifs se présentent sous la forme de mastics que l'on conditionne en cartouches étanches à l'humidité.

Les propriétés intrinsèques d'adhésifs formulés à partir des trois prépolymères P1, P2 et P0 empruntés aux exemples précédents, respectivement adhésif A1, A2 et A0, sont déterminées sur éprouvettes haltères que l'on prégélifie en étuve à 140°C pendant 30 minutes, puis que l'on laisse réticuler dans une atmosphère saturée d'humidité, à température ambiante, pendant 7 jours. Les éprouvettes sont ensuite tractionnées à l'aide d'un dynamomètre à la vitesse de 1 mm/min.

| | | | |
|---|---|---|---|
| Adhésif | A1 | A2 | A0 |
| Contrainte à la rupture | 7,5 MPa | 7,7 MPa | 8,4 MPa |
| Allongement à la rupture | 78% | 50% | 6,4% |
| Module d'Young à -40°C | 164 MPa | 360 MPa | 700 MPa |
| Module d'Young à +23°C | 43 MPa | 120 MPa | 270 MPa |

Il apparaît clairement que l'adhésif A2 selon l'invention présente une souplesse nettement améliorée par rapport à son homologue A0 selon l'art antérieur, avec un allongement à la rupture environ 8 fois plus élevé pour une contrainte à la rupture sensiblement la même. Cela se traduit également par un module d'Young, qui mesure la rigidité du matériau, beaucoup plus faible dans le cas de l'adhésif A1, y compris aux basses températures.

L'augmentation de souplesse apparaît de manière encore plus claire dans le cas de l'adhésif A1, dont la structure est toutefois différente.

### Exemple IV (Collages)

Les essais de collage relatés ci-après sont des essais de laboratoire réalisés sur éprouvettes représentatives des substrats utilisés dans l'industrie automobile (carrosseries et vitrages), et selon des normes usuelles dans cette industrie. Ces substrats présentent les caractéristiques ci-après : substrat verre = stérigmes en verre trempé d'épaisseur 4 mm, de dimensions 50 x 140 mm, recouvert d'une couche d'émail noir sérigraphié d'épaisseur 20 µm; substrat tôle = stérigmes en tôle d'acier d'épaisseur 0,7 mm, de dimensions 25 x 100 mm, recouverte d'une couche de peinture de finition. Avant application de l'adhésif, les substrats sont essuyés à l'aide d'un tissu imbibé d'acétone et séchés à l'air libre. L'adhésif est appliqué sur la face sérigraphiée du verre, entre deux cales parallèles de polytétrafluoroéthylène d'épaisseur 4 mm, séparées par un espace de 12,5 mm. On obtient ainsi, après accostage du stérigme métallique, un joint de dimensions standard 12,5 x 25 mm, d'épaisseur 4 mm.

La prégélification de l'adhésif est provoquée par application simultanée d'un rayonnement infrarouge intense côté verre, et d'un champ électromagnétique de haute fréquence provoquant l'échauffement du métal par induction. On peut ainsi développer une température quasi uniforme d'environ 150°C dans toute l'épaisseur du joint de colle en moins de 30 secondes.

L'assemblage maintenu en position horizontale est soumis à un rayonnement infrarouge court de spectre 0,76 à 1,5 µm, de densité de puissance 50 kW/m², appliqué du coté du stérigme en verre. Simultanément, le stérigme en métal est soumis au champ electromagnétique d'une bobine d'induction spiralée plate ("Pancake") disposée à 1 mm du métal, alimentée par un générateur H.F de fréquence comprise entre 30 et 300 kHz, de puissance 50 kW. Le générateur est muni d'un système de régulation de température à pyromètre infrarouge mesurant la température de surface du stérigme métallique à l'emplacement du joint de colle. L'inducteur est réglé pour une température de palier de 160°C. La montée à cette température s'effectue en 5 secondes.

L'irradiation infrarouge et le champ haute fréquence sont appliqués à l'assemblage simultanément pendant 30 secondes. Après refroidissement, l'assemblage est parfaitement manipulable. Sa résistance au cisaillement par traction, mesurée à l'aide d'un dynamomètre à une vitesse de traction de 2 mm/min.

Ce protocole expérimental est appliqué à l'adhésif A1 de l'exemple III. La résistance mesurée de l'assemblage est de 2,85 MPa. On constate que non seulement l'adhésif est correctement prégélifié sur toute son épaisseur, mais encore que la résistance au cisaillement obtenue après seulement 30 secondes de prégélification est très largement supérieure au minimum nécessaire pour assurer la manipulabilité de l'assemblage.

Le même essai est reproduit, à la différence qu'une fois le cycle de prégélification exécuté, on abandonne l'assemblage pendant 7 jours à l'atmosphère à 23°C. La post-réticulation spontanée de l'adhésif sous l'effet de l'humidité ambiante s'opère et la résistance au cisaillement s'élève à 4,5 MPa.

### Exemple V

On synthétise un prépolymère P3 selon l'invention, de composition similaire à celle du prépolymère P2 de l'exemple II, mais en réduisant la proportion d'allongeur de chaînes (4,4'-bis(Hydroxyméthyl)cyclohexane) à 50 % molaire, pour atteindre une teneur pondérale en isocyanates dans le prépolymère de 3,2 %, une teneur en doubles liaisons polymérisables de 0,65 mmol/g, et donc un rapport molaire isocyanates/insaturations de 0,89. La composition pondérale des réactifs a été établie comme suit:

| | |
|---|---|
| Polytétraméthylèneglycol (M_{w} =2900) | 66,84 parties |
| 4,4'-bis(Hydroxyméthyl)cyclohexane | 1,66 |
| iisocyanate d'isophorone | 26,68 |
| Acrylate d'hydroxyéthyle | 10,44 |
| p-Benzoquinone | 0,056 |
| Dibutyldilaurate d'étain | 0,056 |
| Triéthylènediamine | 0,113 |

Lorsque la réaction est terminée, on refroidit le prépolymère à 25°C et on ajoute les composés suivants :

| | |
|---|---|
| Peroxyde de benzoyle recristallisé | 1,13 |
| Carbonate de calcium stéaraté | 10,20 |
| Oxyde de calcium | 3,00 |
| Sulfate de baryum | 7,50 |
| Tamis moléculaire (déshydratant) | 7,50 |
| Silice pyrogénée hydrophobe | 3,00 |
| Diméthacrylate de triéthylèneglycol | 5,25 |
| Isocyanate de tosyle | 0,30 |
| Plastifiant (quaterphényls hydrogénés) | 6,00 |

Les propriétés mécaniques intrinsèques de l'adhésif ainsi préparé sont déterminées comme dans l'exemple III. On trouve les valeurs suivantes :

| | |
|---|---|
| Résistance à la rupture | 6,9 MPa |
| Allongement à la rupture | 70 % |
| Module d'Young mesuré à -40°C | 185 MPa |
| Module d'Young mesuré à +23°C | 43 MPa |

Cet adhésif est utilisé pour réaliser des collages hybrides verre sur composite polyester/verre avec prégélification par hystérèse diélectrique haute fréquence. Les substrats utilisés sont : substrat verre = stérigmes en verre "float" de dimensions 100 x 25 x 5 mm, dégraissé à l'aide d'une solution à 2% de gamma-aminopropyltriméthoxysilane dans l'isopropanol, puis recouvert d'une couche de primaire d'adhésion pour pare-brise; substrat BMC = stérigmes en polyester renforcé de fibre de verre ("Bulk Moulding Compound") du type utilisé comme panneaux de carrosserie automobile, de dimensions 100 x 25 x 2,5 mm. Les éprouvettes sont essuyées à l'aide d'un chiffon imbibé d'acétone avant le collage.

L'adhésif est déposé sur 5 stérigmes en BMC, à raison de 1,0 g par éprouvette. Les 5 stérigmes sont insérés dans un conformateur à pertes diélectriques haute fréquence. Des cales en polytétrafluoroéthylène d'épaisseur 1 mm sont déposées sur les stérigmes de manière à calibrer les dimensions du joint adhésif à 25 x 12,5 x 1 mm. On affiche ensuite les 5 stérigmes en verre au contact de l'adhésif. On insère au milieu du joint de l'une des éprouvettes une fibre de verre connectée à un thermomètre optique, dont la mesure n'est pas affectée par le champ électrique. Le conformateur est fermé, et on applique entre les deux électrodes un champ électrique de fréquence 27,12 MHz, de puissance telle que l'énergie absorbée dans l'adhésif par hystérèse diélectrique soit de 500 W, soit 100 W par gramme. Le champ haute fréquence est appliqué pendant 90 secondes. La température maximum atteinte au milieu du joint est de 166°C.

Après ouverture du conformateur, et retour à température ambiante, les éprouvettes sont tractionnées dans un dynamomètre équipé de mors spéciaux pour supports fragiles. La résistance au cisaillement par traction mesurée est de 3,6 MPa, soit une valeur très largement supérieure au minimum nécessaire pour assurer la manipulabilité de l'assemblage.

L'expérience est renouvelée, mais l'étape de prégélification par hystérèse diélectrique est suivie d'une étape de post-réticulation de 7 jours, à température ambiante, afin de permettre aux groupements isocyanates résiduels dans l'adhésif de réagir sous l'action de l'humidité atmosphérique, provoquant ainsi la réticulation finale du joint de colle. A l'issue de cette période, la résistance au cisaillement par traction mesurée est de 5,0 MPa.

### Exemple VI

L'adhésif A2 de l'exemple III est utilisé pour réaliser des collages sur composites, en utilisant le même matériau que dans l'exemple V. Des stérigmes de dimensions 100 x 25 x 2,5 mm sont assemblés par un joint de colle dont les dimensions sont fixées par des cales de polytétrafluoroéthylène à 25 x 12,5 x 1 mm. Ces assemblages sont prégélifiés en étuve à la température de 120°C, pendant 30 minutes (ce délai est nécessaire, car les éprouvettes sont placées dans un conformateur métallique d'inertie thermique élevée).

Les éprouvettes sont ensuite abandonnées à l'atmosphère à 23°C pendant 7 jours. La post-réticulation spontanée de l'adhésif sous l'effet de l'humidité ambiante s'opère et la résistance au cisaillement s'élève à 4,45 MPa.

## Revendications

1. Prépolymère prégélifiable thermiquement et post-polymérisable à l'humidité constitué d'un oligomère polyuréthane comportant des segments souples à basse température de transition vitreuse, dont une partie des terminaisons de chaînes est constituée de groupes isocyanates libres, les autres extrémités de chaînes étant constituées de groupements insaturés polymérisables radicalairement, caractérisé en ce qu'il résulte de la réaction d'un diisocyanate aliphatique ou alicyclique sur un mélange de deux composés hydroxylés,
a) un diol oligomère à terminaisons hydroxyles ayant une masse molaire moyenne impérativement comprise entre 1000 et 4000 et de préférence comprise entre environ 2000 et environ 4000, et dont la température de transition vitreuse est inférieure à -40°C, de préférence inférieure à -60°C ;
b) un composé monohydroxylé insaturé susceptible de se polymériser en présence d'un amorceur radicalaire, par exemple un acrylate ou méthacrylate d'hydroxyalcoyle,
et optionnellement,
c) d'un allongeur de chaîne constitué par un diol ou une diamine de masse molaire, comprise entre 60 et 200, les groupes isocyanates libres représentant entre environ 2 et environ 6 % du poids total du prépolymère, et le rapport entre le nombre de terminaisons insaturées et le nombre de terminaisons isocyanates étant compris entre environ 0,5 et environ 2.

2. Prépolymère selon la revendication 1, caractérisé en ce que le diisocyanate est pris dans le groupe constitué par l'isocyanate de 5-isocyanato-1-(isocyanatométhyl)-1,3,3-triméthylcyclohexane (diisocyanate d'isophorone), les diisocyanates de 1,4- et 1,6-hexaméthylène, le diisocyanate de 1,4-tétraméthylène, le diisocyanate de 1,4-cyclohexyle, le 4,4'-méthylènebis(cyclohexylisocyanate), le 4,4'-isopropylidènebis(cyclohexylisocyanate).

3. Prépolymère selon la revendication 1, caractérisé en ce que le diol oligomère est un polytétraméthylène glycol de masse molaire comprise entre 2000 et 3000.

4. Prépolymère selon la revendication 1, caractérisé en ce que le composé monohydroxylé insaturé est un composé représentable par la formule générale
CH₂=CH(R₁)-C(O)O-[CH₂-R₂O]ₙ-H,
où:
R₁ est H ou CH₃,
R₂ est CH₂ ou CH(CH₃),
n est compris entre 1 et 4.

5. Prépolymère selon la revendication 4, caractérisé en ce que le composé monohydroxylé insaturé est pris dans le groupe constitué par l'acrylate de 2-hydroxyéthyle, l'acrylate de 2-hydroxyproyle, le méthacrylate de 2-hydroxyéthyle, le méthacrylate de 2-hydroxypropyle.

6. Prépolymère selon la revendication 1, caractérisé en ce que l'allongeur de chaîne est un diol pris dans le groupe constitué par le 1,4-butane-diol, le 1,3-butanediol, le 2-éthyl-1,3-hexanediol, le 1,4-cyclohexanediol, le 1,4-bis(hydroxyméthyl)cyclohexane.

7. Prépolymère selon la revendication 1, caractérisé en ce que l'allongeur de chaîne est une diamine prise dans le groupe constitué par le 1,4-diaminocyclohexane et le 4,4'-bis(aminocyclohexyl)méthane.

8. Composition adhésive prégélifiable thermiquement et post-polymérisable à l'humidité constituée d'au moins :
- 50 à 90 % en poids d'un prépolymère tel qu'énoncé dans les revendications 1 à 7,
- 0,3 à 3 % en poids d'un composé ou d'un mélange de composés amorceurs de polymérisation radicalaire,
- 0,01 à 0,1 % d'un inhibiteur de polymérisation radicalaire.

9. Composition adhésive selon la revendication 8, caractérisé en ce que les inhibiteurs de polymérisation radicalaire sont pris dans le groupe constitué de l'hydroquinone, du paraméthoxyphénol, du paratertiobutylphénol, de la 1,4-benzoquinone, de la 1,4-naphtoquinone et de la phénothiazine.
